# EUROPÄISCHE PATENTSCHRIFT

(11) **EP 2 991 816 B1**
(45) Veröffentlichungstag und Bekanntmachung des Hinweises auf die Patenterteilung: **04.09.2019**
(21) Anmeldenummer: 14709557.4
(22) Anmeldetag: 10.03.2014
(51) Int. Cl.: B29C 48/92, B29C 55/04, B29C 55/28, B29K 105/00, B29C 55/06

(54) **VERFAHREN ZUR REGELUNG DES DICKENPROFILS VON INLINE GERECKTEN FOLIEN**
METHOD FOR REGULATING THE THICKNESS PROFILE OF INLINE-ORIENTED FILMS
PROCÉDÉ DE RÉGULATION DU PROFIL D'EPAISSEUR DE FEUILLES ETIREES EN LIGNE

(30) Priorität: 02.05.2013 DE 102013007669
(43) Veröffentlichungstag der Anmeldung: 09.03.2016
(73) Patentinhaber: Windmöller & Hölscher KG, 49525 Lengerich (DE)
(72) Erfinder: BACKMANN, Martin, 49525 Lengerich (DE); BUSSMANN, Markus, 45147 Essen (DE); GOLDENSTEIN, Jens, 49074 Osnabrück (DE)
(74) Vertreter: Laufhütte, Dieter
(86) Internationale Anmeldenummer: PCT/EP2014/000618
(87) Internationale Veröffentlichungsnummer: WO 2014/177235

(56) Entgegenhaltungen:
- EP-A1- 2 277 681
- EP-A2- 0 707 938
- GB-A- 2 074 349
- JP-A- H01 253 421
- US-A- 3 448 183

## Beschreibung

Die Erfindung betrifft ein Verfahren zur Regelung des Dickenprofils von inline gereckten Folien, vorzugsweise Schlauchfolien, die im Blasverfahren hergestellt werden.

Zur Herstellung von Schlauchfolien im Blasverfahren dienen üblicherweise Blasfolienextrusionsanlagen, die bereits seit langer Zeit im Einsatz sind. Solchen Anlagen werden Kunststoffe in granulierter Form zugeführt, die dann in Extrudern unter hoher Druckeinwirkung zu einer viskosen Masse plastifiziert werden. Diese Masse, die aufgrund des Druckes eine hohe Temperatur aufweist, wird in einem Blaskopf ringförmig ausgebildet und entweicht dem Blaskopf durch eine Ringdüse. Unmittelbar nach dem Verlassen der Ringdüse bildet die Masse bereits einen Folienschlauch. Dieser Folienschlauch kann jedoch, da er noch nicht vollständig abgekühlt ist, in seinem Durchmesser verändert werden. In der Regel wird der Durchmesser vergrößert, indem in den Innenraum des Folienschlauches Druckluft eingeblasen wird. Damit der Folienschlauch immer einen konstanten Durchmesser aufweist, wird er auf Abstand zu oder direkt entlang von Folienführungselementen geführt. Diese Anordnung der Folienführungselemente wird auf dem Gebiet der Blasfolienextrusionsanlagen als Kalibrierkorb bezeichnet.

Nach dem Durchlaufen des Kalibrierkorbs kann der Folienschlauch in einem reversierenden Wendeabzug flachgelegt, verlegt und anschließend in einer Reckanlage monoaxial in Maschinenrichtung verstreckt werden.

Mit dem Recken von thermoplastischen Folien können deren Eigenschaften gezielt verändert werden. Solche Eigenschaften sind beispielsweise die Transparenz oder die Festigkeit. Ein solches Recken, das in Quer- und/oder Längsrichtung der Folienbahn erfolgen kann, kann direkt nach dem Extrusionsprozess inline erfolgen. Das Recken bzw. Verstrecken von thermoplastischen Folien ist beispielsweise in der WO2006/063641A1 und in der WO2011/057918A1 beschrieben.

Bei der Herstellung von Schlauchfolien kommen Foliendickenprofilregelsysteme mit segmentierten Regelzonen zum Einsatz. Durch diese Systeme lässt sich das Foliendickenprofil derart regeln, dass die Dickenabweichungen über den gesamten Schlauchumfang möglichst gering sind.

So ist aus der DE 3941185 A1 bereits ein Verfahren zur Regelung der Foliendicke von Schlauchfolien aus Folienblasanlagen mit nachgeschalteter axialer bzw. biaxialer Verstreckung der aufgeblasenen Schlauchfolien in einem Ofen bekannt, sodass eine Endfolie entsteht, die möglichst geringe Abweichungen in der Dicke aufweist.

Bei der Längsverstreckung in einer Reckanlage wird die Folie entsprechend des Reckgrades in Maschinenrichtung gedehnt und dadurch die Foliendicke reduziert. Gleichzeitig schnürt die Folie in Querrichtung ein, wodurch sich die Breite der Folie verringert. Diese Einschnürung hat zur Folge, dass die gereckte Folie von der Folienmitte in Richtung der Folienränder zunehmend geringfügig dicker wird, obwohl sie zuvor im Blasverfahren auf eine möglichst konstante Dicke geregelt wurde. Besonders ausgeprägt ist diese Dickenzunahme in den Folienrandbereichen. Dieses verursacht beim anschließenden Aufwickeln der Folie einen Kantenaufbau am Folienwickel. Die Folienbahn wird an den Rändern mit zunehmendem Wickeldurchmesser immer mehr gedehnt.

Um Folien mit möglichst gleichmäßigem Dickenprofil, wie sie insbesondere zum Bedrucken oder Laminieren gefordert werden, herzustellen, müssen die Folienränder, die dem gewünschten Dickenprofil nicht entsprechen, weggeschnitten werden. Durch dieses als Besäumen bezeichnete Wegschneiden geht allerdings ein Großteil der Folienbreite verloren. So fallen auf jeder Seite der Folie bis ca. 200mm durch das Besäumen, d.h. das Wegschneiden, weg.

Aus der EP 2 277 681 A1 ist ein gattungsgemäßes Verfahren bekannt geworden, bei dem das Foliendickenprofil der in der Folienblasanlage hergestellten Schlauchfolie so geregelt wird, dass durch das Recken eine Folie mit einem Dickenprofil mit möglichst geringen Abweichungen von der mittleren Foliendicke über die gesamte Folienbreite hergestellt wird. Hierzu wird im Folienblasprozess eine Schlauchfolie hergestellt, die zwei gegenüberliegende Dünnstellen aufweist. Bei der Flachlegung der Schlauchfolie wird nun darauf geachtet, dass die Dünnstellen Folienrandbereiche bilden und dass die verstreckte Folie dann ein Dickenprofil mit möglichst geringen Abweichungen von der mittleren Foliendicke aufweist. Die gezielt eingebrachten Dünnstellen kompensieren also die später beim Recken entstehenden Verdickungen im Randbereich, sodass sich eine bis in den Randbereich hin erstreckende gleichmäßige Foliendicke ergeben soll.

Allerdings besteht bei den Folien mit den dünneren Randbereichen das Problem, dass hier beim Durchgang durch die Walzen der Reckanlage die Dünnstellen weniger Walzenkontakt haben, was beim Herstellprozess und insbesondere beim Reckprozess nachteilig ist, da der "Grip" insbesondere im Randbereich nicht ausreichend ist.

Aufgabe der vorliegenden Erfindung ist es daher, ein gattungsgemäßes Verfahren derart weiterzubilden, dass dieses möglichst störungsfrei durchgeführt werden kann, um eine Folie mit gleichmäßigem Dickenprofil herzustellen, bei der ein möglichst kleiner Verlust durch Abschneiden des Randes entsteht.

Erfindungsgemäß wird die Aufgabe durch ein Verfahren mit der Kombination der Merkmale des Anspruchs 1 gelöst. Dabei wird ausgehend von einem gattungsgemäßen Verfahren zur Regelung des Dickenprofils von inline gereckten Folien, vorzugsweise Schlauchfolien, die im Blasverfahren hergestellt, in einem reversierenden Wendeabzug flachgelegt, verlegt und anschließend in einer Reckanlage monoaxial in Maschinenrichtung verstreckt werden, das Dickenprofil der Folie so geregelt, dass durch das Recken eine Folie mit einer gezielten Aufdickung in ihrem Randbereich bezogen auf die mittlere Foliendicke über die gesamte Folienbreite ohne Randbereiche entsteht.

Das bedeutet, dass im Unterschied zum Stand der Technik gemäß der EP 2 277 681 A1 bewusst dicke Randbereiche gebildet werden, die während des Verstreckens in der Reckanlage noch zusätzlich verdickt werden. Durch diese Verdickung im Randbereich wird ein wesentlich besserer "Grip", also ein verbesserter Kontakt zwischen den Folienrändern und den Walzen der Reckanlage ermöglicht. Dies führt zu einer störungsfreien Herstellung von Folien, die abgesehen von den Randbereichen eine sehr gleichmäßige Foliendicke aufweisen.

Vorteilhafte Ausgestaltungen der Erfindung ergeben sich aus den sich an den Hauptanspruch anschließenden Unteransprüchen.

Demnach wird die Foliendicke im Randbereich vorteilhaft zwischen 15% und 100% dicker ausgebildet als die mittlere Foliendicke, die sich ohne diese Randbereiche ergibt.

Besonders bevorzugt sind die dicker ausgebildeten Randbereiche bezogen auf die Gesamtbreite der Folie schmal, vorzugsweise 5mm bis 20mm und ganz besonders vorzugsweise nur 7mm bis 10mm. Hierdurch wird also erreicht, dass ein wesentlich geringerer Verschnitt bei der Herstellung der Folie erzeugt wird.

Gemäß einer besonders vorteilhaften Ausgestaltung der Erfindung werden im Randbereich der Folie zwei nebeneinanderliegende Dickstellen gebildet, zwischen denen eine Dünnstelle angeordnet ist. Dabei liegen die Dickstellen vergleichsweise eng nebeneinander. Durch die Temperierung der Folie mit Walzen bekommt die Folie an der Dünnstelle weniger Walzenkontakt und bleibt somit kälter als die Folie an den benachbarten Dickstellen. Hierdurch kann die Folie nochmals mehr Querkräfte beim Recken aufnehmen, was zu einer weiteren Verbesserung des Folienhandlings während des Herstellverfahrens führt.

Vorteilhaft wird die extrudierte Schlauchfolie über ihren Umfang auf das vorgegebene Dicken-Sollprofil geregelt.

Bei dem erfindungsgemäßen Verfahren wird vorteilhaft die durch den Wendeabzug entstehende Sollprofilverlegung über die Folienbreite berücksichtigt und kontinuierlich nachgeregelt, wobei eine Zuordnung eines oder mehrerer Umfangspunkte der flachgelegten Schlauchfolie zu einer oder mehrerer Regelzonen im Regelalgorithmus zur Steuerung der segmentierten Regelzone berücksichtigt wird. Bei diesen Regelzonen handelt es sich um die entsprechenden segmentierten Zonen im Folienblaskopf, über die die Dicke der hergestellten Schlauchfolie eingestellt werden kann.

Besonders vorteilhaft wird das Dicken-Sollprofil über einen Algorithmus aus den Werten einer Messeinrichtung geregelt, die die Foliendicke nach der monoaxialen Verstreckung in Maschinenrichtung über die gesamte Folienbreite misst.

Der Algorithmus zur Ansteuerung der einzelnen segmentierten Regelzonen besteht aus einer Überlagerung des Grundprofils aus der Foliendickenprofilregelung der Folienblasanlage und des Reckprofils aus der Verlegung der Schlauchfolie durch den Wendeabzug unter weiterer Berücksichtigung von Einflüssen durch den Reckprozess.

Schließlich wird der erfindungsgemäß sehr schmale dick ausgebildete Randbereich weggeschnitten, um so eine Folie mit einem über ihre Breite gleichmäßigen Dickenprofil zu erhalten.

Weitere Merkmale, Einzelheiten und Vorteile der Erfindung werden anhand eines in der Zeichnung dargestellten Ausführungsbeispiels erläutert. Es zeigen:
- Figur 1:: eine Blasfolienextrusionsanlage gemäß dem Stand der Technik,
- Figur 2:: eine flachgelegte Schlauchfolie nach dem Stand der Technik;
- Figur 3:: eine flachgelegte Schlauchfolie gemäß der vorliegenden Erfindung,
- Figuren 4 bis 7:: Dicken-Istprofile eines Folienschlauchs vor dem Verstrecken im Reckwerk und
- Figur 8:: ein Dicken-Istprofil eines Folienschlauchs gemäß der vorliegenden Erfindung nach dem Recken im Reckwerk.

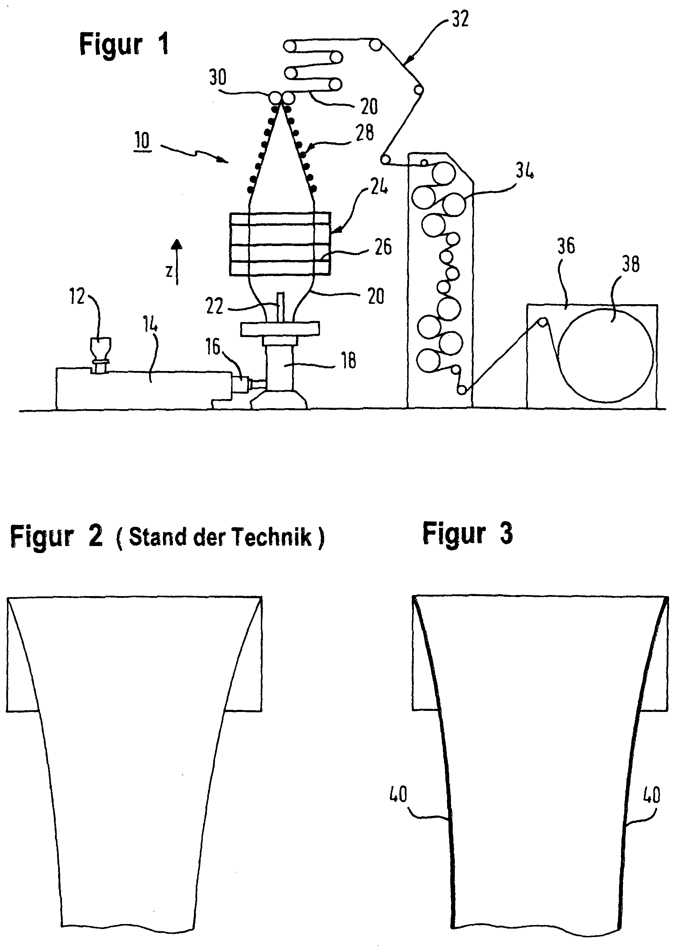

Figur 1 zeigt eine bekannte Blasfolienextrusionsanlage 10. Durch einen Einfüllstutzen 12 wird ein Kunststoff zugeführt, der dann in einem Extruder 14 plastifiziert wird. Die entstandene Masse wird über eine Verbindungsleitung 16 einem Blaskopf 18 zugeführt, welcher einen Folienschlauch 20 bildet. Dabei verlässt der Folienschlauch 20 den Blaskopf 18 durch eine nicht sichtbare Ringdüse in Transportrichtung z.

Aufgrund der Zuführung von Druckluft durch einen Gebläsestutzen 22 wird der Folienschlauch 20 unmittelbar nach Verlassen eines Blaskopfes 18 aufgeweitet. Der Durchmesser des Folienschlauches 20 wird jedoch durch einen Kalibrierkorb 24 begrenzt. Innerhalb des Kalibrierkorbs 24 wird der Folienschlauch 20 von Platten geführt, durch welche Druckluft auf den Folienschlauch gerichtet wird. Der Kalibrierkorb 24 besteht zudem aus einem Rahmen 26. Nach dem Verlassen des Kalibrierkorbs 24 gelangt der Folienschlauch 20 in eine Flachlegeeinheit 28, in welcher der Folienschlauch nahezu oder vollständig zu einer doppellagigen Folienbahn umgeformt wird. Dabei wird der Folienschlauch 20 zwischen Paare von Führungselementen geführt, die im Verlauf der Transportrichtung z einen immer geringeren Abstand voneinander einnehmen. Die vollständige Flachlegung erfolgt durch eine Abquetschvorrichtung, die aus einem Paar von Abquetschwalzen 30 besteht.

Die Folienbahn 20 wird nun durch eine Reversiervorrichtung 32 geführt, bevor sie in ein Reckwerk 34 einläuft. Ein entsprechendes Reckwerk ist beispielhaft in der WO2011/057918A1 beschrieben, auf die vollinhaltlich Bezug genommen wird.

Schließlich wird die gereckte Folie nach dem Austritt aus dem Reckwerk 34 einer Wickelvorrichtung 36 zugeführt, wo die Folienbahn 20 zu einem Wickel 38 verarbeitet wird.

Die Figuren 2 und 3 zeigen schematisch, wie die Schlauchfolie 20 durch das Recken im Reckwerk 34 "einschnürt", d.h. in die Länge gezogen wird, während sie an Breite abnimmt.

Die Figuren 2 und 3 zeigen einen unmittelbaren Vergleich zwischen dem Stand der Technik und der mit dem erfindungsgemäßen Verfahren hergestellten Folie. Diese weist die verdickten Randbereiche 40 auf. Anhand der beiden Figuren soll deutlich gemacht werden, dass bei gleichen Reckbedingungen im Reckwerk 34 die Folie gemäß dem Stand der Technik wesentlich stärker zum Einschnüren neigt als die erfindungsgemäße Folie, was auf die verstärkten schmalen Randbereiche 40 zurückzuführen ist.

In der Blasfolienextrusionsanlage 10 gemäß Figur 1 sind zwei Dickenmesseinrichtungen vorgesehen, die hier aus Vereinfachungsgründen nicht eingezeichnet sind. Die erste Dickenmesseinrichtung ist im Bereich der aufgeblasenen Blasfolie vor dem Zusammenlegen des Folienschlauchs angeordnet. Die zweite Messeinrichtung ist nach dem Reckwerk und vor der Wickelvorrichtung angeordnet.

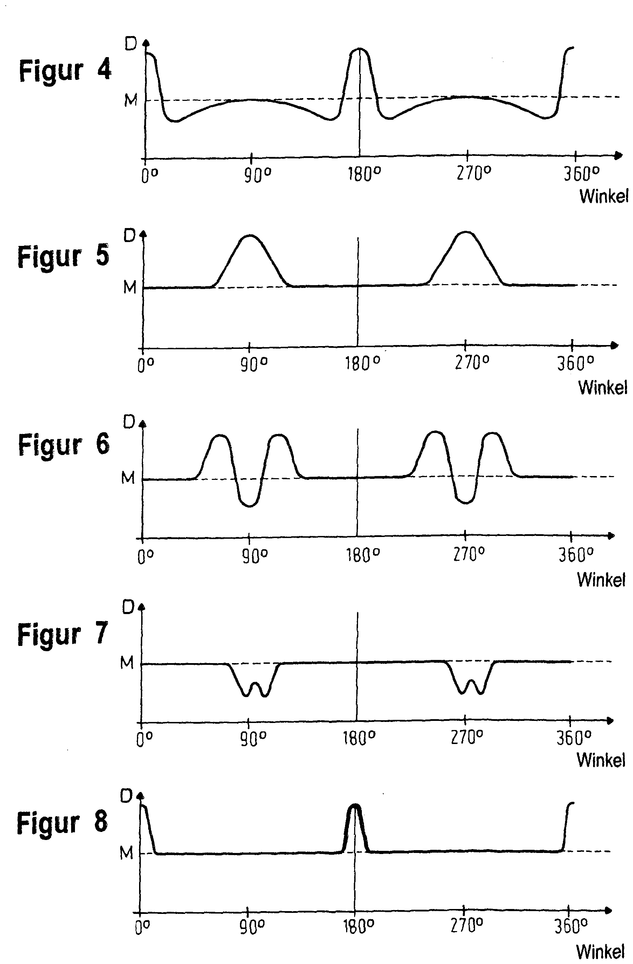

Die Figuren 4 bis 7 zeigen erfindungsgemäße Dickenprofile über den Umfang des Folienschlauchs, wie sie mit der ersten Messvorrichtung im Bereich der Folienblase aufgenommen werden. Hier handelt es sich somit um Dickenprofile vor dem Recken in der Reckanlage 34.

Bei dem Dickenprofil gemäß Figur 4 wird deutlich, dass hier der Randbereich bei 0° bzw. 360° und bei 180° in einem schmalen Bereich verdickt ausgebildet ist. Mit M ist das gewünschte mittlere Dickenprofil der Folie dargestellt. Im Bereich vor den gezielt vorgesehenen Verdickungen im Randbereich sind geringfügige Dünnstellen vorgesehen, sodass sich nach entsprechendem Recken das in der Figur 8 dargestellte Profil in der zweiten nach dem Reckwerk 34 angeordneten Messanordnung ergibt.

In der Figur 5 ist ein um 90° phasenversetztes Dickenprofil gezeigt, bei dem ein etwas breiterer Randbereich im Vergleich zu dem Dickenprofil gemäß Figur 4 entsprechend verdickt ausgeführt ist. Entsprechende dünnere Stellen als das gewünschte mittlere Dickenprofil sind hier nicht vorgesehen.

In Figur 6 sind im Randbereich zwei eng nebeneinanderliegende Dickstellen mit einer zwischen ihnen angeordneten Dünnstelle vorgesehen.

In der Figur 7 ist im Randbereich eine gezielte Dickstelle in einem Dünnstellenbereich im Randbereich gebildet.

## Patentansprüche

1. Verfahren zur Regelung des Dickenprofils von inline gereckten Folien (20), vorzugsweise Schlauchfolien, die im Blasverfahren hergestellt, in einem reversierenden Wendeabzug (32) flachgelegt, verlegt und anschließend in einer Reckanlage (34) monoaxial in Maschinenrichtung verstreckt werden,
**dadurch gekennzeichnet,**
**dass** das Dickenprofil der Folie (20) so geregelt wird, dass dicke Randbereiche gebildet werden, die während des Verstreckens in der Reckanlage noch zusätzlich verdickt werden, derart dass durch das Recken eine Folie mit einer gezielten Aufdickung in ihren Randbereichen bezogen auf die mittlere Foliendicke über die gesamte Folienbreite ohne Randbereiche entsteht,
**dass** die dicker ausgebildeten Randbereiche bezogen auf die Gesamtbreite der Folie schmal sind, und
**dass** die schmalen dicker ausgebildeten Randbereiche weggeschnitten werden, um so eine Folie mit einem über ihre Breite gleichmäßigen Dickenprofil zu erhalten.

2. Verfahren nach Anspruch 1, **dadurch gekennzeichnet, dass** die gebildete Foliendicke im Randbereich zwischen 15% und 100% dicker ist als die mittlere Foliendicke ohne die Randbereiche.

3. Verfahren nach Anspruch 1, **dadurch gekennzeichnet, dass** die dicker ausgebildeten Randbereiche eine Breite von 5 mm - 20 mm, vorzugsweise 7 mm - 10 mm, aufweisen.

4. Verfahren nach einem der Ansprüche 1 bis 3, **dadurch gekennzeichnet, dass** im Randbereich der Folie (20) zwei nebeneinanderliegende Dickstellen gebildet werden, zwischen denen eine Dünnstelle angeordnet ist.

5. Verfahren nach einem der vorhergehenden Ansprüche, **dadurch gekennzeichnet, dass** die extrudierte Schlauchfolie über ihren Umfang auf das vorgegebene Dicken-Sollprofil geregelt wird.

6. Verfahren nach einem der vorhergehenden Ansprüche, **dadurch gekennzeichnet, dass** die durch den Wendeabzug (32) entstehende Sollprofilverlegung über die Folienbreite berücksichtigt und kontinuierlich nachgeregelt wird, wobei eine Zuordnung eines oder mehrerer Umfangspunkte der flachgelegten Schlauchfolie zu einer oder mehrerer Regelzonen im Regelalgorithmus zur Steuerung der segmentierten Regelzone berücksichtigt wird.

7. Verfahren nach einem der vorhergehenden Ansprüche, **dadurch gekennzeichnet, dass** das Dicken-Sollprofil über einen Algorithmus aus den Werten einer Messeinrichtung geregelt wird, die die Foliendicke nach der monoaxialen Verstreckung in Maschinenrichtung über die gesamte Folienbreite misst.

8. Verfahren nach Anspruch 7, **dadurch gekennzeichnet, dass** der Algorithmus zur Ansteuerung der einzelnen segmentierten Regelzonen zumindest aus einer Überlagerung des Grundprofils aus der Foliendickenprofilregelung der Folienblasanlage und des Reckprofils aus der Verlegung der Schlauchfolie durch den Wendeabzug unter weiterer Berücksichtigung von Einflüssen durch den Reckprozess besteht.

## Claims

1. Method of regulating the thickness profile of inline stretched films (20), preferably tubular films, which are manufactured in a blowing process, which are positioned flat in a reversing take-off (32), which are laid and which are subsequently stretched monoaxially in a machine direction in a stretching unit (34),
**characterized in that**
the thickness profile of the film (20) is regulated such that thick marginal regions are formed, which are additionally thickened during the stretching in the stretching unit, such that a film with a targeted thickening in its marginal regions with respect to its average film thickness develops over the entire film width without marginal regions, by the stretching,
the marginal regions formed thicker are narrow with respect to the total width of the film, and
the narrow marginal region formed thicker is cut off in order thus to obtain a film having a thickness profile uniform over its width.

2. Method in accordance with claim 1, **characterized in that** the formed film thickness in the marginal region is between 15% and 100% thicker than the mean film thickness without the marginal regions.

3. Method in accordance with claim 1, **characterized in that** the marginal regions formed thicker have a width of 5 mm - 20 mm, preferably 7 mm - 10 mm.

4. Method in accordance with one of the claims 1 to 3, **characterized in that** two thick points disposed next to one another are formed in the marginal region of the film (20) and a thin point is arranged between them.

5. Method in accordance with one of the preceding claims, **characterized in that** the extruded tubular film is regulated to the predefined desired thickness profile over its periphery.

6. Method in accordance with one of the preceding claims, **characterized in that** the desired profile laying over the film width arising due to the reversing take-off is advantageously taken into account and continuously reregulated, with an association of one or more peripheral points of the flat-positioned tubular film with or more regulating zones being taken into account in the regulating algorithm for controlling the segmented regulating zone.

7. Method in accordance with one of the preceding claims, **characterized in that** the desired thickness profile is regulated via an algorithm from the values of a measuring device which measures the film thickness after the monoaxial stretching in the direction of the machine over the total film width.

8. Method in accordance with claim 7, **characterized in that** the algorithm for controlling the individual segmented regulation zones consists at least a superposition of the base profile from the film thickness profile regulation of the film blowing unit and of the stretch profile from the laying of the tubular film by the reversing take-off while further taking account influences by the stretching process.

## Revendications

1. Procédé servant à réguler le profil d'épaisseur de films (20) étirés en ligne, de préférence de films tubulaires, qui sont fabriqués lors du procédé de soufflage, sont posés à plat dans un dispositif de sortie réversible (32), sont posés puis sont étirés de manière monoaxiale dans le sens de la machine dans une installation d'étirage (34),
**caractérisé en ce**
**que** le profil d'épaisseur du film (20) est régulé de telle sorte que des zones de bord épaisses sont formées, qui sont épaissies encore en supplément pendant l'étirage dans l'installation d'étirage de telle manière qu'un film avec une surépaisseur ciblée dans ses zones de bord par rapport à l'épaisseur de film moyenne est créé sur la totalité de la largeur de film sans zones de bord par l'étirage,
**que** les zones de bord réalisées de manière plus épaisse sont étroites par rapport à la largeur totale du film, et
**que** les zones de bord étroites réalisées de manière plus épaisse sont retirées par découpage pour obtenir ainsi un film avec un profil d'épaisseur régulier sur sa largeur.

2. Procédé selon la revendication 1, **caractérisé en ce que** l'épaisseur de film formée dans la zone de bord est plus épaisse entre 15 % et 100 % que l'épaisseur de film moyenne sans les zones de bord.

3. Procédé selon la revendication 1, **caractérisé en ce que** les zones de bord réalisées de manière plus épaisse présentent une largeur de 5 mm - 20 mm, de préférence de 7 mm - 10 mm.

4. Procédé selon l'une quelconque des revendications 1 à 3, **caractérisé en ce que** dans la zone de bord du film (20), deux emplacements épais juxtaposés sont formés, entre lesquels est disposé un emplacement mince.

5. Procédé selon l'une quelconque des revendications précédentes, **caractérisé en ce que** le film tubulaire extrudé est régulé sur sa périphérie sur le profil théorique d'épaisseur prédéfini.

6. Procédé selon l'une quelconque des revendications précédentes, **caractérisé en ce que** la pose de profil théorique créée par le dispositif de sortie (32) est prise en compte sur la largeur de film et est régulée ultérieurement en continu, dans lequel une attribution d'un ou de plusieurs points en périphérie du film tubulaire posé à plat à une ou à plusieurs zones de régulation est prise en compte dans l'algorithme de régulation pour commander la zone de régulation segmentée.

7. Procédé selon l'une quelconque des revendications précédentes, **caractérisé en ce que** le profil théorique d'épaisseur est régulé par l'intermédiaire d'un algorithme à partir des valeurs d'un système de mesure, qui mesure l'épaisseur de film après l'étirage monoaxial dans le sens de machine sur la totalité de la largeur de film.

8. Procédé selon la revendication 7, **caractérisé en ce que** l'algorithme servant à piloter les diverses zones de régulation segmentées est constitué au moins d'une superposition du profil de base issu de la régulation de profil d'épaisseur de film de l'installation de soufflage de film et du profil d'étirage issu de la pose du film tubulaire par le dispositif de sortie en tenant compte par ailleurs d'incidences liées au processus d'étirage.
